# EUROPEAN PATENT APPLICATION

(11) **EP 3 416 077 A1**
(43) Date of publication of application: **19.12.2018**
(21) Application number: 18177865.5
(22) Date of filing: 14.06.2018
(51) Int. Cl.: G06F 21/10, G06F 21/62

(54) **DYNAMIC CONTENT ACCESS MANAGEMENT**

(30) Priority: 14.06.2017 US 201762519533 P
(71) Applicant: Dot Play Ltd., 6789139 Tel-Aviv (IL)
(72) Inventor: SHITRIT, Shai, 3787000 Rehan (IL); INBAR, Iris, 4527016 Hod-HaSharon (IL); BARBI, Hai Haim, 6291940 Tel-Aviv (IL); MENAGED, Shlomi, 5339716 Givataim (IL)
(74) Representative: Kramer, Dani

(57) **Abstract**

An endpoint device (101) adapted for designating, encrypting, and sharing protected digital content (121), comprising at least one hardware processor executing a code adapted to: designate a digital content to protect and at least one target user to receive the digital content according to at least one user input (122) made using a man machine interface; send at least one personalized access condition (123) for allowing the target user to access the content to at least one server (102); encrypt the content; and send an identifier (124) of the personalized access condition to at least one target device (103) associated with the target user to allow at least one player executed on the target device to acquire the personalized access condition from the one server using the identifier and to decrypt the encrypted digital content for rendering the digital content on at least one screen (105) when the personalized access condition is met.

## Description

### BACKGROUND

The present invention, in some embodiments thereof, relates to a device for managing access to digital content and, more specifically, but not exclusively, to a device for dynamically managing access to digital content distributed among peers.

Digital content includes, but is not limited to, audio content, video content, image content, and text. When digital content is stored as a digital file, the digital content is typically easy to copy, distribute and consume as copying and distribution are typically done using common file copy and file transfer methods, and copies of a digital content file may be consumed in a manner identical to consuming the original digital content file.

As used herein, the term "content" means "digital content".

There may be a need to control access to a digital content, for example limit an amount of times the content is viewed by a receiver of the content, limit a period of time in which the receiver is permitted to view the content and limit an amount of copies made of the content. Some systems for protecting digital content from unauthorized copying and consumption use file encryption methods, for example symmetrical methods such as the Advanced Encryption Standard (AES) and asymmetrical methods such as advanced elliptic curve cryptography. In some systems, one or more keys for decrypting an encrypted content are delivered to a receiving device of the encrypted content separately from the encrypted content itself. In some systems, the one or more keys are stored on the receiving device.

However, once a receiving device is in possession of the encrypted digital content file and the one or more keys for decrypting it, there are typically no limitations on the amount of times the receiving device may view the digital content, or on the amount of times the receiving device may copy the digital content. In addition, a copied encrypted file and the one or more keys may be distributed to any recipient using common file distribution methods, and a recipient of a copy of the encrypted digital content file and the one or more keys may decrypt and view the content.

### SUMMARY

The present invention may provide a device for dynamically managing access to digital content distributed among peers.

This may be achieved by the features of the independent claims. Further implementation forms are apparent from the dependent claims, the description and the figures. Aspects and embodiments of the present invention are set out in the appended claims. These and other aspects and embodiments of the invention are also described herein.

According to a first aspect of the invention, an endpoint device adapted for designating, encrypting, and sharing protected digital content, comprises at least one hardware processor executing a code adapted to: designate a digital content to protect and at least one target user to receive the digital content according to at least one user input made using a man machine interface; send at least one personalized access condition for allowing the at least one identified target user to access the digital content to at least one server; encrypt the digital content; and send an identifier of the at least one personalized access condition to at least one target device associated with the at least one target user to allow at least one player executed on the at least one target device to acquire the at least one personalized access condition from the at least one server using the identifier and to decrypt the encrypted digital content for rendering the digital content on at least one screen when the at least one personalized access condition is met.

According to a second aspect of the invention, an endpoint device adapted for playing protected digital content, comprises at least one hardware processor, executing a code adapted to: receive a content identification of the protected digital content and an identifier of at least one personalized access condition for allowing at least one identified target user to access the digital content, from a second endpoint device; show the content identification on a visual display of the endpoint device following receiving the content identification; send a request to retrieve the at least one personalized access condition, to a server, upon selection of the content identification by the at least one identified target user made using a man machine interface; receive a response from the server comprising the at least one personalized access condition, instructions for retrieving the protected digital content and one or more decoding means to decode and decrypt the protected digital content; retrieve at least part of the protected digital content; decrypt the at least part of the protected digital content using the one or more decoding means, to produce a decrypted content; and render the decrypted content, on at least one screen of the endpoint device subject to the at least one personalized access condition being met.

According to a third aspect of the invention, a method for protecting digital content, comprises: designating a digital content to protect and at least one target user to receive the digital content according to at least one user input made using a man machine interface; sending at least one personalized access condition for allowing the at least one identified target user to access the digital content to at least one server; encrypting the digital content; and sending an identifier of the at least one personalized access condition to at least one target device associated with the at least one target user to allow at least one player executed on the at least one target device to acquire the at least one personalized access condition from the at least one server using the identifier and to decrypt the encrypted digital content for rendering the digital content on at least one screen when the at least one personalized access condition is met.

With reference to the first and third aspects, in a first possible implementation of the first and third aspects of the present invention the code is further adapted to send at least one new personalized access condition for allowing the at least one identified target user to access the digital content to the at least one server, according to at least one new user input made using the man machine interface. Dynamically changing the personalized access condition allows personalized control of access to the digital content designated to be protected even after the content has been shared or copied.

With reference to the second aspect, in a first possible implementation of the second aspect of the present invention, the at least one personalized access condition is selected from a group consisting of: an amount of plays does not exceed a predefined threshold amount of plays, an amount of play time does not exceed a predefined threshold amount of time, a user identifier of the target user equals a predefined target user identifier, a device identifier of the endpoint device equals a predefined device identifier, an Internet Protocol (IP) address of the endpoint device equals a predefined IP address and an IP address of the endpoint device is in a predefined geo-location. These conditions restrict the distribution of the digital content to unauthorized targets and restrict playing time and number of plays of the digital content.

With reference to the second aspect, in a second possible implementation of the second aspect of the present invention the code is further adapted to: send a new request to retrieve the at least one personalized access condition, to the server, upon rendering the decrypted content; receive a new response from the server comprising at least one new personalized access condition, new instructions for retrieving the protected digital content and one or more new decoding means to decode and decrypt the protected digital content; retrieve a new part of the protected digital content; decrypt the new part of the protected digital content using the one or more new decoding means, to produce a new decrypted content; and render the new decrypted content, on the at least one screen, subject to the at least one new personalized access condition being met. Sending a new request after rendering only part of the digital content allows changing the one or more personalized access conditions even after starting to play the digital content, for example to allow playing only a first part of the digital content.

With reference to the second aspect, in a third possible implementation of the second aspect of the present invention the code is adapted to retrieve the at least part of the protected digital content from at least one content server. Retrieving the protected digital content from a content server allows sharing the digital content using small files, reducing costs of storage and bandwidth consumption.

With reference to the second aspect, in a fourth possible implementation of the second aspect of the present invention the code is further adapted to: receive a file comprising at least some of the protected digital content, from the second endpoint device; and retrieve the at least part of the protected digital content from the file. Receiving the protected digital content from the second endpoint device allows playing the content when the endpoint device is not connected to a digital communication network.

With reference to the second aspect, or the fourth implementation of the second aspect, in a fifth possible implementation of the second aspect of the present invention the file further comprises the identifier. Combining the personalized access condition identifier in the same file as the protected digital content simplifies sharing the digital content, by sharing a single file.

With reference to the second aspect, or the third implementation of the second aspect, in a sixth possible implementation of the present invention the code is adapted to retrieve the at least part of the protected digital content from one content server and the new part of the protected digital content from a different content server. Distributing a plurality of parts of the protected digital content between a plurality of content servers facilitates redundancy in case of a content server failure and speed of distribution.

With reference to the second aspect, or the third implementation of the second aspect, in a sixth possible implementation of the present invention the endpoint device further comprises a digital communication interface. Optionally, the endpoint device is connected to the at least one content server using the digital communication interface. Optionally, the endpoint device is connected to the at least one server using the digital communication interface.

The invention extends to methods, system and apparatus substantially as herein described and/or as illustrated with reference to the accompanying figures.

The invention also provides a computer program or a computer program product for carrying out any of the methods described herein, and/or for embodying any of the apparatus features described herein, and a computer readable medium having stored thereon a program for carrying out any of the methods described herein and/or for embodying any of the apparatus features described herein.

The invention also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

Any feature in one aspect of the invention may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory.

Furthermore, features implanted in hardware may generally be implemented in software, and vice versa. Any reference to software and hardware features herein should be construed accordingly.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic block diagram of an exemplary system with regards to sharing content, according to some embodiments of the present invention;
FIG. 2 is a schematic block diagram of an exemplary system with regards to playing content, according to some embodiments of the present invention;
FIGs. 3A and 3B are schematic illustrations of exemplary files, according to some embodiments of the present invention;
FIG. 4 is a flowchart schematically representing an optional flow of operations for encoding a protected digital content, according to some embodiments of the present invention;
FIG. 5 is a flowchart schematically representing an optional flow of operations for playing a protected digital content, according to some embodiments of the present invention;
FIG. 6 is a flowchart schematically representing an optional flow of operations for identifying instructions, according to some embodiments of the present invention;
FIG. 7 is a flowchart schematically representing an optional flow of operations for verifying instructions, according to some embodiments of the present invention;
FIG. 8 is a flowchart schematically representing an optional flow of operations for updating management data, according to some embodiments of the present invention; and
FIGs. 9A, 9B, 9C, 9D and 9E are exemplary screenshots of a possible user interface for distributing a digital content, according to some embodiments of the present invention.

### DETAILED DESCRIPTION

The present invention, in some embodiments thereof, relates to a device for managing access to digital content and, more specifically, but not exclusively, to a device for dynamically managing access to digital content distributed among peers.

A producer or a distributor of digital content may want to control the distribution of the digital content. For example, one person sending another person a family photo may wish to prevent other people from viewing the family photo. Another example is a distributor of a digital video file for a fee, wishing to limit the amount of time an identified viewer receiving the file may view the file, or the period of time during which the identified viewer is permitted to view the file.

Systems for managing access rights are typically not available to a small-scale content producer or distributor such as a private person or a small business, wishing to enforce access control on their digital content. In addition, in some of these systems, metadata describing access conditions to the content are stored in one file with the content. Example of access conditions are: a maximum amount of views, a maximum amount of play time, a subscription request, a payment request, a permitted geo-location, a permitted Internet Protocol (IP) address, a target user identifier and a target device identifier. As a result, in such systems access conditions are static, and do not change over time. Once a file is distributed with a certain set of access conditions these access conditions persist and cannot be changed or revoked. In such systems, there is no way to prevent an unauthorized recipient from viewing the content after receiving the content.

The present invention, in some embodiments thereof, enables a producer or distributor of the content to define a plurality of access rules, each governing access of one or more identified recipients to the content on one or more target devices associated with the identified recipients. In these embodiments, the content is encrypted and stored in a file, and the rules are stored in storage of an authorization service comprising one or more hardware processors executing a code configured to process and respond to authorization requests. Optionally, the rules are defined for a group of unidentified recipients. By defining a plurality of rules, each pertaining to one or more identified recipients, the producer or distributor of the content may grant different access conditions to different recipients. For example, a person distributing a photo may allow members of the person's family indefinite access, and allow an identified friend of the family access for a limited amount of time, for example 2 days only. In these embodiments, metadata identifying one or more content properties and one or more personalized access conditions to the content according to the rules is created for the content and stored in a file. Examples of access conditions are: a maximum amount of views, a maximum amount of play time, a subscription request, a payment request, a permitted geo-location, a permitted Internet Protocol (IP) address, a target user identifier and a target device identifier. Examples of content properties are: a source of digital content data and a source of commercial content data. A player is a software object executed by one or more other hardware processors for the purpose of playing the content. The player uses the metadata to send the authorization service a request for the one or more personalized access conditions every time the player attempts to play the content and continuously throughout playing the content. Copying and distributing the content may be by copying and distributing a file containing the metadata.

Separating the metadata identifying a personalized access condition from the personalized access condition itself and requiring the player to request the personalized access condition every time the player attempts to play the content and continuously throughout playing the content enables a producer or distributor of the content to change the set of rules governing authorization to play the content both before and after the content has been distributed, as well as after the content has been copied. For example, a condition for playback may be an identification of the playing device. A player on a different device, attempting to play a copied file, may not be authorized and playing the content fails. Another example is when the producer or distributor of the content decides to revoke permission to play the content from a previously authorized recipient. In this example, the user's player stops playing the content immediately upon receiving the updated personalized access condition. In addition, the next time the user's player attempts to play the content the updated personalized access condition will not allow the player to play the content.

In some embodiments the metadata identifying the one or more personalized access conditions is stored in the same file as the content, allowing the player simple access to both the metadata and the content. In other embodiments, the content and the metadata are stored in two separate files. In these embodiments, a file storing the metadata only is significantly smaller than a file storing both the metadata and the content. As in such embodiments copying the content requires only copying the file containing the metadata, distributing the content to multiple recipients is more economical in storage, network bandwidth and power consumption than distributing a file containing both metadata and content.

As used herein, the term storage means "non-volatile digital storage".

In some embodiments of the present invention, the content is divided into a plurality of segments, each stored on a different storage from a plurality of storages. Examples of a storage are a hard disk physically attached to the one or more other hardware processor, and a network storage connected to the one or more hardware processor using a digital communication network such as a local area network or a wide area network. In these embodiments, the player uses the metadata to retrieve the plurality of segments from the plurality of non-volatile digital storages. Optionally, the metadata allows the player to retrieve the data directly. Optionally, the player uses the metadata in a request sent to the authorization server and the server sends a response comprising information for retrieving one or more of the plurality of segments. Storing the content in one or more segments allows encrypting each segment using a different key, thus enabling enforcement of different rules for different segments of the content. Storing one or more segments of the content in different storages allows redundancy, increasing availability in case of failure of access to one or more of the storages.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

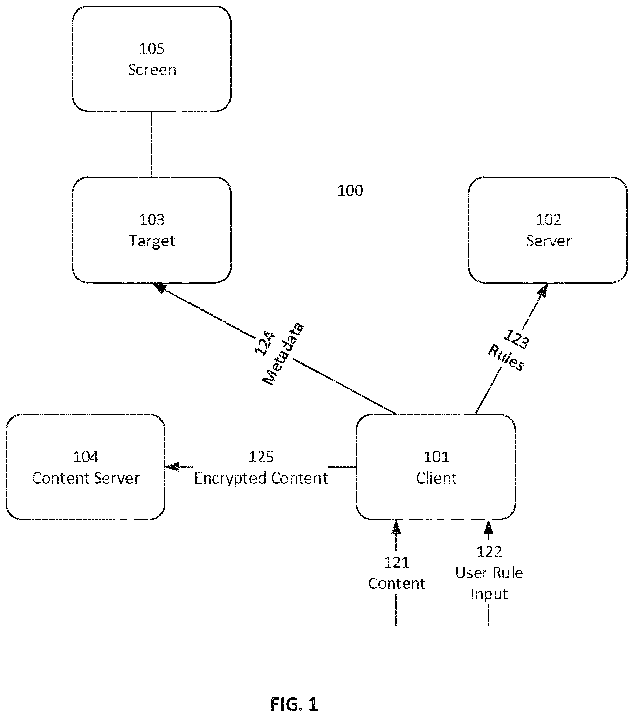

Reference is now made to FIG. 1, showing a schematic block diagram of an exemplary system 100 with regards to sharing content, according to some embodiments of the present invention. In such embodiments, an endpoint client device 101, comprising at least one hardware processor, receives from a user input in 122 using a man machine interface about one or more rules governing access to a digital content received by the endpoint client device in 121 for the purpose of preparing the digital content for distribution to one or more target endpoint devices 103 associated with one or more identified target users. Optionally the digital content is a file. Examples of digital content are a video file or stream, an audio file or stream, an image, and a document. Optionally, the user selects the digital content file from a gallery of previously captured photos or videos. Optionally, the user uses a camera to capture a photo or a video and uses the captured photo or captured video as the digital content. Optionally, the user selects from a user's list of contact persons the one or more identified target users to receive the digital content. The one or more target endpoint devices may be one or more hardware processors executing one or more players comprising one or more software objects for playing digital content. The one or more identified users may be identified by one or more user identifiers. The one or more target endpoint devices may be identified by one or more device identifications. The user input may include one or more target user and target device identifications. Optionally, endpoint client device 101 produces one or more personalized access conditions, set according to the user input and in 123 sends the one or more personalized access conditions to at least one server 102, registering the digital content with the server. Optionally, server 102 has a database. Optionally, endpoint client device 101 produces metadata comprising a content identifier of the digital content and a condition identifier of the one or more personalized access conditions. In 124 endpoint client device 101 optionally sends the metadata to one or more identified target endpoint devices 103, to allow a player executed on the one or more target endpoint devices to access at least one server 102 acquire the one or more personalized access conditions and one or more decoding means for rendering the digital content and playing the digital content on at least one screen 105 of at least one target endpoint device 103.

Optionally, endpoint client device 101 encrypts and decodes the digital content to produce an encrypted content. In some embodiments, endpoint client device 101 comprises a digital communication interface and sends the encrypted content in 125 to a content server 104, using a digital communication network such as a local area network or a wide area network. For example the digital communication network may be an Internet Protocol (IP) based digital communication network. In some other embodiments, endpoint client device 101 produces a play file comprising a plurality of sections, including one section comprising the metadata and another section comprising the encrypted content. Optionally, endpoint client device 101 sends the play file to one or more target endpoint devices 103 to allow a player executed on the one or more target endpoint devices to access at least one server 102 using the target endpoint device's identification and acquire the one or more personalized access conditions and one or more decoding means for rendering the digital content and playing the digital content on at least one screen 105 of at least one target endpoint device 103.

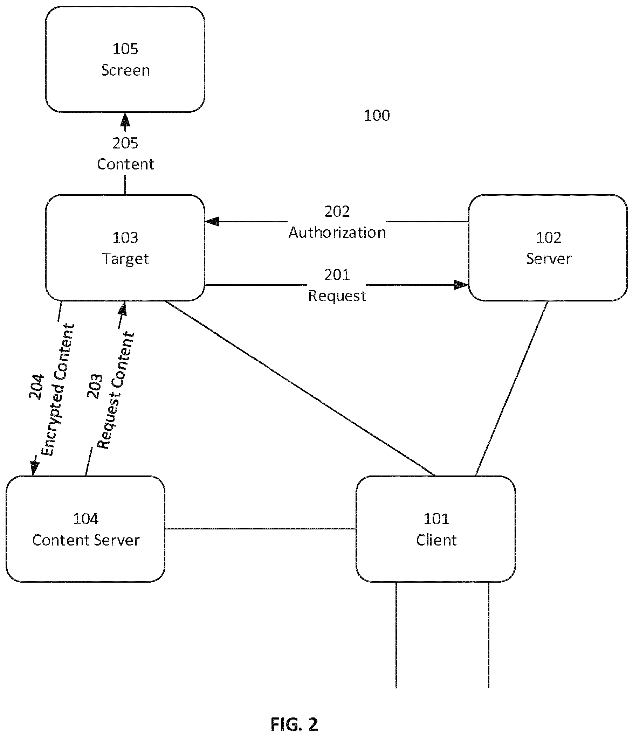

A target endpoint device of the one or more target endpoint devices may be used to play the digital content. Reference is now also made to FIG. 2, showing a schematic block diagram of exemplary system 100 with regards to playing content, according to some embodiments of the present invention. In these embodiments, after receiving the metadata from endpoint device 101, one or more target endpoint devices 103 shows the content identifier on a screen or visual display of the one or more endpoint target devices. Upon selection of the content identifier by a user made using a man machine interface, optionally one or more endpoint devices 103 sends in 201 a request to at least one server 102 comprising the condition identifier received in the metadata. In response, at least one server 102 optionally sends in 202 a response to target endpoint device 103, comprising the one or more personalized access conditions and one or more decoding means for target endpoint device 103 to decrypt the digital content and play the digital content on screen 105. In embodiments where endpoint device 101 stores the encrypted content on content server 104, target endpoint device 103 sends content server 104 in 203 a request for at least part of the encrypted content, and in 204 the content server sends the target endpoint device at least part of the encrypted content. Target endpoint device 103 optionally uses the response from server 102 to decode and decrypt the at least part of the encrypted content and in 205 optionally plays the content on its screen 105, subject to the one or more personalized access conditions being met. For example, the one or more personalized access conditions may comprise a maximum amount of times to play the content, and the target endpoint client may play the content only if the amount of times the content has been played so far does not exceed the maximum amount of times to play. In another example, the one or more personalized access conditions may comprise a maximum duration (amount of time) to play the content, and the target endpoint client may play the content only if the duration the content has been played so far does not exceed the maximum duration to play. In embodiments where endpoint client device 101 sends target endpoint device 103 a play file comprising the metadata and the encrypted content, the target endpoint device optionally retrieves the at least part of the encrypted content from the play file, then optionally uses the response from server 102 to decode and decrypt the at least part of the encrypted content and in 205 optionally plays the content on its screen 105, subject to the one or more personalized access conditions being met.

When playing content, target endpoint device 103 may continuously communicate with server 102 and may update a plurality of values according to one or more events pertaining to playing the digital content. For example, target endpoint device 103 may increment an amount of plays so far upon successful playing of the digital content. In another example, target endpoint device 103 may increment an amount of play time so far after playing the digital content for an identified amount of time. After playing the at least part of the encrypted content, the target optionally sends a new request to at least one server 102 comprising the condition identifier received in the metadata. In response, at least one server 102 optionally sends a new response to target endpoint device 103, comprising one or more new personalized access conditions and one or more new decoding means for target endpoint device 103 to render the digital content and play the digital content on screen 105. In embodiments where endpoint client device 101 stores the encrypted content on content server 104, target endpoint device 103 sends content server 104 a new request for a new part of the encrypted content, and the content server sends the target a new part of the encrypted content. Target endpoint device 103 optionally uses the new response from server 102 to decode and decrypt the new part of the encrypted content and optionally plays the content on its screen 105, subject the one or more personalized access conditions being met. In embodiments where endpoint client device 101 sends target endpoint device 103 a play file comprising the metadata and the encrypted content, the target endpoint device optionally retrieves the new part of the encrypted content from the play file, then optionally uses the new response from at least one server 102 to decode and decrypt the new part of the encrypted content and optionally plays the content on its screen 105, subject to the one or more new access conditions being met. In some embodiments of the present invention, the target endpoint device retrieves the at least part of the encrypted content from on server and retrieves the new part of the encrypted server from another, different, server.

Optionally, the user may provide endpoint client device 101 with new input about new rules governing access to the digital content. Upon receiving new input about new rules, endpoint client device 101 optionally produces one or more new personalized access conditions, set according to the new user input and sends the one or more new personalized access conditions to at least one server 102. A new response to a new request received from target endpoint device 103 after server 102 receives the one or more new personalized access conditions, may be produced by server 102 according to the one or more new personalized access conditions.

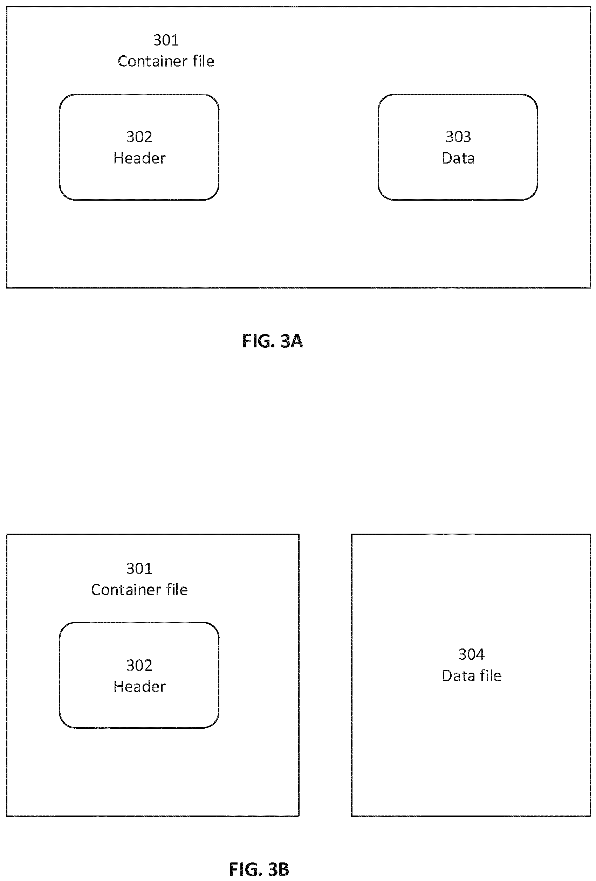

In some embodiments endpoint client device 101 produces a play file comprising only the metadata. In other embodiments, endpoint client device 101 produces a play file comprising the metadata and the encrypted content. Reference is now also made to FIGs. 3A and 3B, showing schematic illustrations of exemplary files, according to some embodiments of the present invention. FIG. 3A shows an exemplary container play file 301 comprising two sections: section 302 is a header section, comprising the metadata, and section 303 is a data section, comprising the encrypted content. FIG. 3B shows another exemplary container play file 301 comprising header section 302 comprising the metadata. Content file 304 is different from container play file 301 and comprises the encrypted content. Content file 304 may be sent to content server 104.

To encode, encrypt and share digital content, endpoint client device 101 may implement the following possible method.

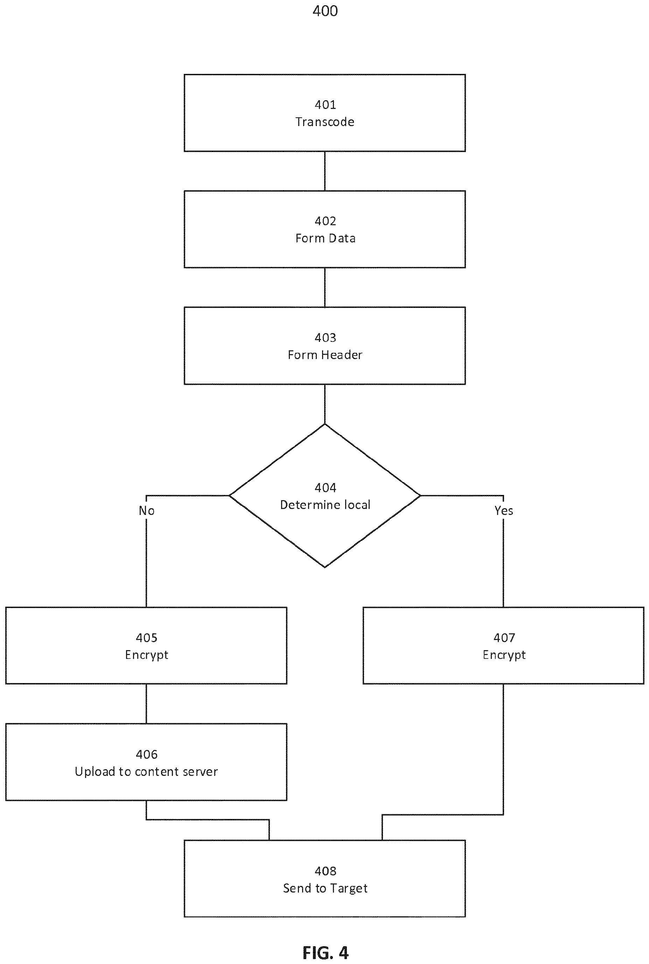

Reference is now also made to FIG. 4, showing a flowchart schematically representing an optional flow of operations 400 for encoding a protected digital content, according to some embodiments of the present invention. In such embodiments, endpoint client device 101 receives from a user a digital content and user input about one or more rules governing access of one or more identified target users to the digital content. Optionally the user selects the digital content file from a gallery of previously captured photos or videos. Optionally, the user uses a camera connected to the endpoint client device to capture a photo or a video and uses the captured photo or captured video as the digital content. Optionally, the user selects from a user's list of contact persons the one or more identified target users to receive the digital content. In 401, the endpoint client device optionally transcodes the digital content to produce a transcoded content. Digital content that is an image may be transcoded using an image transcoding format, for example WebP, JPG and PNG. Digital content that is video may be transcoded using a video transcoding format, for example VP8, VP9, High Efficiency Video Coding (HEVC) and Advanced Video Coding (AVC). Digital content that is audio may be transcoded using an audio transcoding format, for example Opus and Moving Pictures Expert Group Audio Layer III (MP3), Advanced Audio Coding (AAC) and High Efficiency Advanced Audio Coding (HE-AAC). In 402, the endpoint client device optionally forms a data section and in 403 the endpoint client device optionally forms a header section, comprising metadata including a plurality of values of a plurality of properties describing the digital content and describing access parameters to the digital content according to the one or more rules received from the user. In some embodiments the metadata is formed as a JavaScript Object Notation (JSON) object. In 404, the endpoint client device optionally determines according to the one or more rules received from the user whether to store the metadata in a file together with the digital content (that is, use local data) or whether to separate the digital content from the metadata (that is, use remote data). When the endpoint client device determines use of local data, the endpoint client device optionally encrypts and encodes in 402 the metadata to produce a header section and the transcoded content to produce a data section and optionally produces a local play file comprising the header section and the data section. For example, the digital content and metadata may be encrypted using Advanced Encryption Standard (AES) and then encoded for transport using Base64 encoding. Other examples of encoding are Base122 and custom built binary-to-text encoding algorithms. Optionally, the metadata in the local play file is unencrypted. In 408, the endpoint client device optionally sends the local play file to the one or more identified targets 103. When the endpoint client device determines use of remote data, the endpoint client device optionally encrypts in 405 the metadata to produce a remote play file comprising a header section and the transcoded content to produce a data file. Optionally, the metadata in the remote play file is unencrypted. In 406, the endpoint client device optionally sends the data file to content server 104 and in 408 the endpoint client device optionally sends the remote play file to the one or more identified target endpoint devices 103.

In addition, endpoint client device 101 optionally produces one or more personalized access conditions and one or more means for decrypting the encrypted digital content, and sends the one or more personalized access conditions and one or more means for decrypting the encrypted digital content to server 102. The one or more means for decrypting the encrypted digital content may comprise one or more of: a unique ID, an initialization vector and a secret key encoded. One or more of the one or more means for decrypting the encrypted digital content may be encoded using MD5. Optionally, when the header section of a play file, local or remote, is encrypted, the header section includes an unencrypted unique identifier identifying the play file, for the purpose of retrieving the one or more means for decrypting an encrypted header section.

To play a protected digital content, target endpoint device 103 may implement the following possible method.

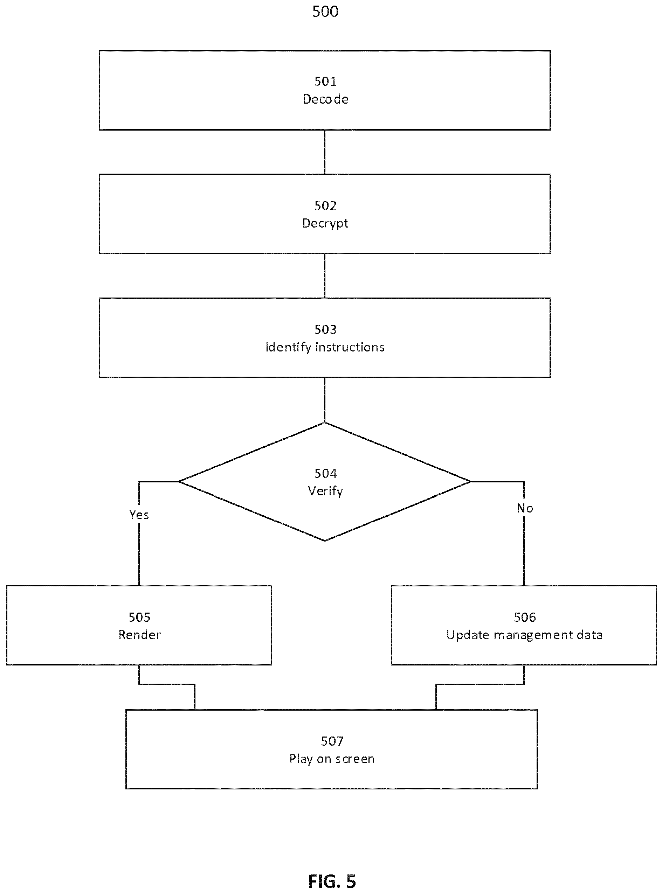

Reference is now made also to FIG. 5, showing a flowchart schematically representing an optional flow of operations 500 for playing a protected digital content on a target endpoint device 103, according to some embodiments of the present invention. After receiving a play file from endpoint client device 101, in 501 the target endpoint device optionally decodes the header section from the play file, for example using Base64 decoding, and then in 502 optionally decrypts the decoded header section, for example using AES decode. Optionally the target end point device uses an unencrypted play file identifier included in the header section to retrieve from server 102 one or more means for decrypting the header section. Next, in some embodiments of the present invention, the endpoint client device restores a JSON format of the metadata. Next the endpoint client device retrieves from server 102 the one or more personalized access conditions using the condition identifier from the metadata. In some embodiments where the play file comprises at least some of the encrypted digital content, the target endpoint device optionally decodes at least part of the data section from the play file, for example using Base64 decoding, and then decrypts the decoded data, for example using AES decode. Optionally the target end point device uses an unencrypted play file identifier included in the header section to retrieve from server 102 one or more means for decrypting the data section. In some embodiments where the endpoint client device stores the encrypted content on content server 106, the target endpoint device retrieves at least part of the protected digital content from content server 106, decodes the retrieved data, for example using Base64 decoding, and then decrypts the decoded data, for example using AES decode and the one or more decoding means in the metadata or retrieved from server 102. Next, in 503, the target endpoint device optionally identifies one or more instructions for verifying whether the one or more access conditions are met.

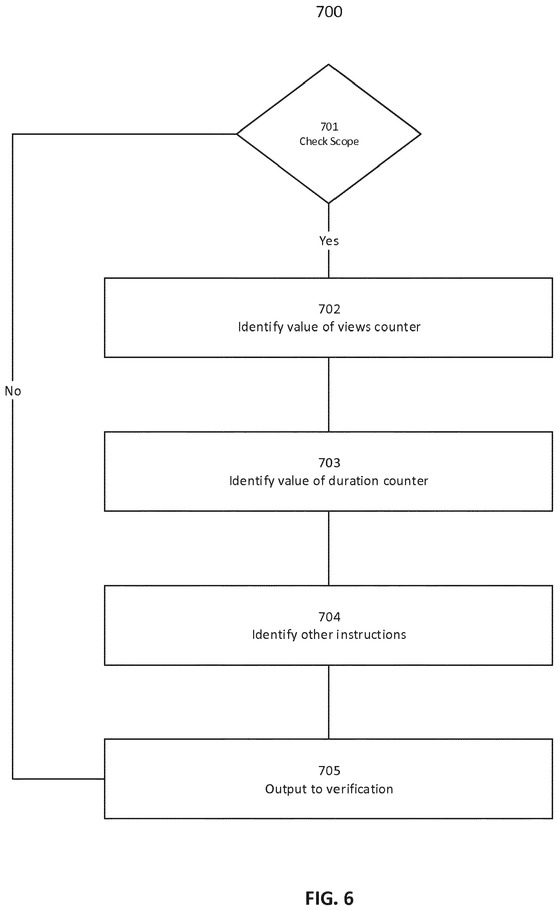

Reference is now made also to FIG. 6 showing a flowchart schematically representing an optional flow of operations 700 for identifying instructions, according to some embodiments of the present invention. In such embodiments, the target client device checks in 701 whether the digital content is within scope, that is whether all previously checked access conditions have been met. When the target client device determines the digital content is not within scope, the target client device optionally outputs this determination in 705. Otherwise, the target client device optionally identifies in 702 a current value of an amount of views counter and in 703 a current value of a play duration counter. In 704 the target client device may identify other instructions, for example a requirement to pay a fee and an instruction to play an advertisement on top of the played-back content. Next in 705 the target client device optionally outputs the identified values and instructions.

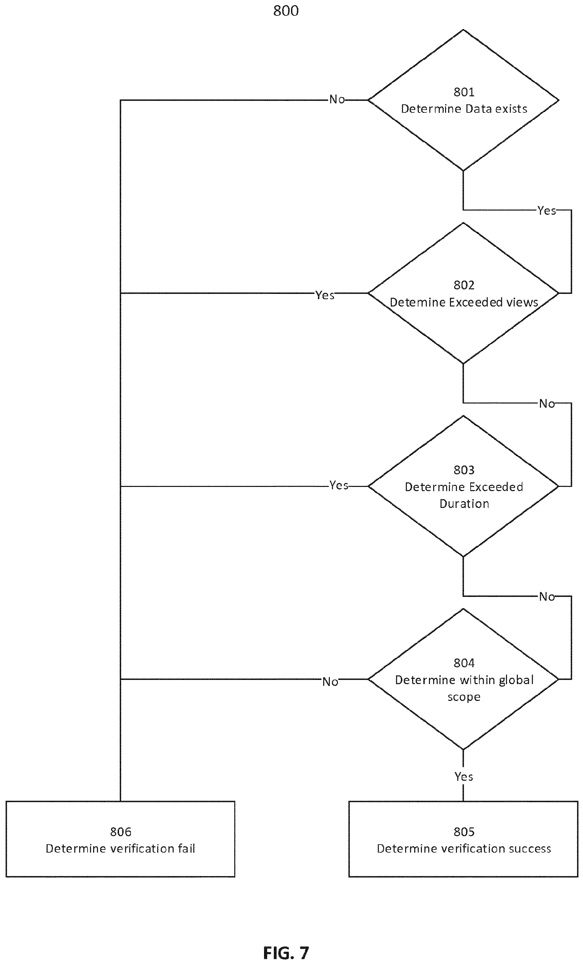

Reference is now made again to FIG. 5. In 504, the target endpoint device verifies whether the target endpoint device is authorized to render the protected digital content. Reference is now made also to FIG. 7, showing a flowchart schematically representing an optional flow of operations 800 for verifying instructions, according to some embodiments of the present invention. In such embodiments, the target endpoint device verifies that the one or more access conditions are met, using information including the values identified in 503. In such embodiments, after determining according to the one or more personalized access conditions that an identified user of the target endpoint device is authorized to play the content on the target endpoint device, in 801 the target endpoint device determines that content data has been retrieved and exists. When content data exists, in 802 the target endpoint device optionally determines whether the current value of the amount of views counter exceeds a maximum amount of play times described in the one or more personalized access conditions. When not, in 803 the target endpoint device optionally determines whether the current value of the play duration counter exceeds a maximum play duration described in the one or more personalized access conditions. When not, in 804 the target endpoint device optionally determines whether the digital content is within global scope, that is whether all previously checked personalized access conditions have been met. When the one or more personalized access conditions are met, in 805 the target endpoint device optionally determines a successful verification. When the one or more personalized access conditions are not fully met, in 806 the target endpoint device optionally determines a failed verification.

Referring again to FIG. 5, upon determining a successful verification in 505 the target endpoint device optionally renders the at least part of the protected digital content and in 507 optionally plays the rendered content on a screen of the target endpoint device. Upon determining a failed verification, in 506 the target endpoint device optionally updates management data. Optionally, the target endpoint device updates management data on server 102.

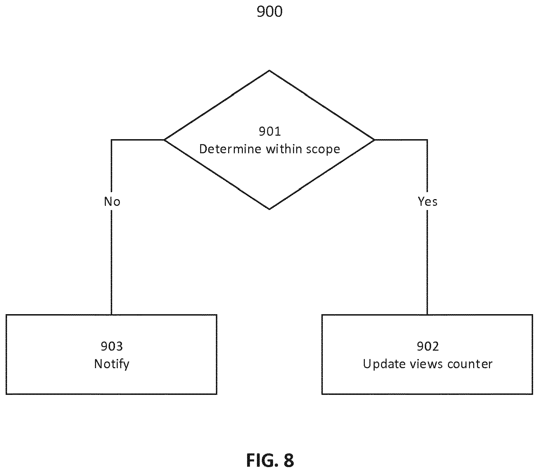

Reference is now made also to FIG. 8, showing a flowchart schematically representing an optional flow of operations 900 for updating management data, according to some embodiments of the present invention. In such embodiments, in 901 the target endpoint device determines whether the digital content is within scope, that is whether all previously checked personalized access conditions have been met. Optionally, personalized access conditions previously checked include an authentication process. When the digital content is within scope, in 902 the target endpoint device optionally updates the value of the play duration counter and the current value of the amount of views counter. When the digital content is not within scope, in 903 the target endpoint device optionally produces a notification for the user. Optionally, the target endpoint device deletes the play file and/or the protected digital content from the target endpoint device following a failed verification.

Referring again to FIG. 5, in 507 the target endpoint device optionally plays the notification on the screen of the target endpoint device for the user to view.

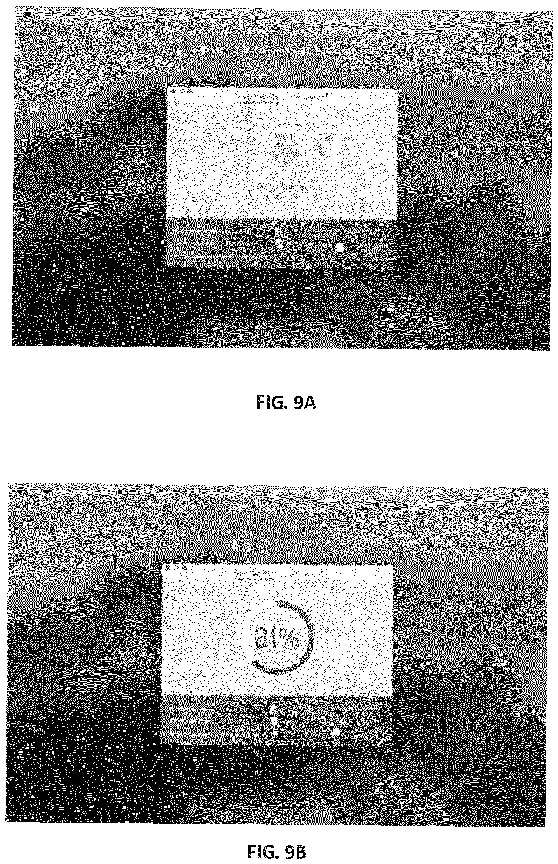

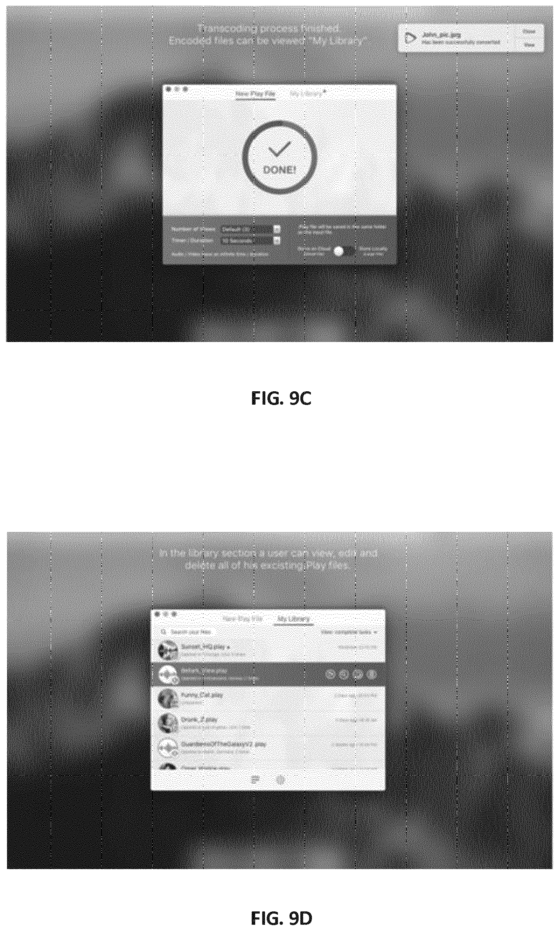

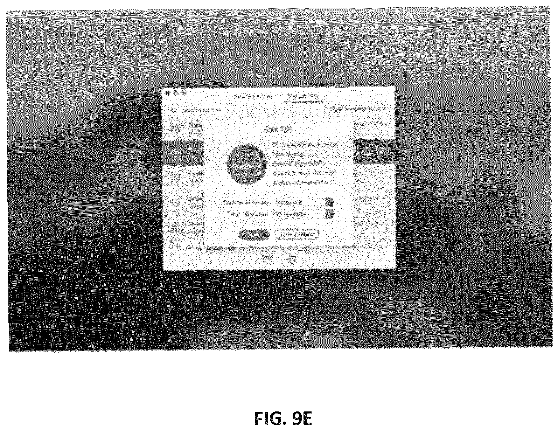

In some embodiments the code executed by the endpoint client device comprises a graphical user interface. Reference is now made to FIG. 9A, 9B, 9C, 9D and 9E, showing exemplary screenshots of a possible user interface for sharing a digital content, according to some embodiments of the present invention. FIG 9A shows a first exemplary screen for determining a digital content to protect by dragging a link to a file containing the digital content to an identified location on the first screen, as well as a plurality of drop boxes and switches for selecting a maximum amount of play times, a maximum duration of play time and whether to store the encrypted digital content in one file with the metadata.

FIG. 9B shows a second exemplary screen for tracking progress of preparing the digital content for sharing.

FIG. 9C shows a third exemplary screen indicating the digital content is ready for sharing.

FIG. 9D shows a fourth exemplary screen showing a user library comprising a plurality of digital contents ready to be shared. In this screen a user may select digital contents for sharing, or for modifying one or more rules governing access to the digital content.

FIG. 9E shows a fifth exemplary screen for modifying one or more rules governing access to a selected digital content from the user library.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant access conditions will be developed and the scope of the term access condition is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. An endpoint device (101) adapted for designating, encrypting, and sharing protected digital content (121), comprising:
at least one hardware processor executing a code adapted to:
designate a digital content to protect and at least one target user to receive said digital content according to at least one user input (122) made using a man machine interface;
send at least one personalized access condition (123) for allowing said at least one identified target user to access said digital content to at least one server (102);
encrypt said digital content; and
send an identifier (124) of said at least one personalized access condition to at least one target device (103) associated with said at least one target user to allow at least one player executed on said at least one target device to acquire said at least one personalized access condition from said at least one server using said identifier and to decrypt said encrypted digital content for rendering said digital content on at least one screen (105) when said at least one personalized access condition is met.

2. An endpoint device (103) adapted for playing protected digital content (205), comprising:
at least one hardware processor, executing a code adapted to:
receive a content identification of said protected digital content and an identifier (124) of at least one personalized access condition (123) for allowing at least one identified target user to access said digital content, from a second endpoint device (101);
show said content identification on a visual display of said endpoint device following receiving said content identification;
send a request (201) to retrieve said at least one personalized access condition, to a server (102), upon selection of said content identification by said at least one identified target user made using a man machine interface;
receive a response (202) from said server comprising said at least one personalized access condition, instructions for retrieving said protected digital content and one or more decoding means to decode and decrypt said protected digital content;
retrieve at least part of said protected digital content;
decrypt said at least part of said protected digital content using said one or more decoding means, to produce a decrypted content; and
render said decrypted content, on at least one screen (105) of said endpoint device subject to said at least one personalized access condition being met.

3. The endpoint device (103) of claim 2, wherein said at least one personalized access condition (123) is selected from a group consisting of: an amount of plays does not exceed a predefined threshold amount of plays, an amount of play time does not exceed a predefined threshold amount of time, a user identifier of said target user equals a predefined target user identifier, a device identifier of said endpoint device equals a predefined device identifier, an Internet Protocol (IP) address of said endpoint device equals a predefined IP address and an IP address of said endpoint device is in a predefined geo-location.

4. The endpoint device (103) of claim 2 or 3, wherein said code is further adapted to:
send a new request to retrieve said at least one personalized access condition (123), to said server (102), upon rendering said decrypted content;
receive a new response (202) from said server (102) comprising at least one new personalized access condition, new instructions for retrieving said protected digital content (205) and one or more new decoding means to decode and decrypt said protected digital content;
retrieve a new part of said protected digital content;
decrypt said new part of said protected digital content using said one or more new decoding means, to produce a new decrypted content; and
render said new decrypted content, on said at least one screen (105), subject to said at least one new personalized access condition being met.

5. The endpoint device (103) of any of claims 2 to 4, wherein said code is adapted to retrieve said at least part of said protected digital content (205) from at least one content server (104).

6. The endpoint device (103) of any of claims 2 to 5, wherein said code is further adapted to:
receive a file comprising at least some of said protected digital content (205), from said second endpoint device (101); and
retrieve said at least part of said protected digital content from said file.

7. The endpoint device (103) of claim 6, wherein said file further comprises said identifier (124).

8. The endpoint device (103) of claim 4, wherein said code is adapted to retrieve said at least part of said protected digital content (205) from one content server (104) and said new part of said protected digital content from a different content server.

9. The endpoint device (103) of claim 5, further comprising a digital communication interface;
wherein said endpoint device is connected to said at least one content server (104) using said digital communication interface.

10. The endpoint device (103) of any of claims 2 to 9, further comprising a digital communication interface;
wherein said endpoint device is connected to at least one server (102) using said digital communication interface.

11. The endpoint device (101) of claim 1, wherein said code is further adapted to:
send at least one new personalized access condition (123) for allowing said at least one identified target user to access said digital content to said at least one server (102), according to at least one new user input made using said man machine interface.

12. A method for protecting digital content (121), comprising:
designating a digital content to protect and at least one target user to receive said digital content according to at least one user input (122) made using a man machine interface;
sending at least one personalized access condition (123) for allowing said at least one identified target user to access said digital content to at least one server (102);
encrypting said digital content; and
sending an identifier (124) of said at least one personalized access condition to at least one target device (103) associated with said at least one target user to allow at least one player executed on said at least one target device to acquire said at least one personalized access condition from said at least one server using said identifier and to decrypt said encrypted digital content for rendering said digital content on at least one screen (105) when said at least one personalized access condition is met.
